# EUROPEAN PATENT SPECIFICATION

(11) **EP 3 731 442 B1**
(45) Date of publication and mention of the grant of the patent: **25.10.2023**
(21) Application number: 17935459.2
(22) Date of filing: 28.12.2017
(51) Int. Cl.: H04L 1/00, B60T 8/172, B60W 40/105, B60T 8/17, B61L 25/02

(54) **DETERMINING METHOD AND SYSTEM FOR REAL-TIME DRIVING SPEED OF TRAIN AND RELATED DEVICES**
BESTIMMUNGSVERFAHREN UND -SYSTEM FÜR ECHTZEIT-FAHRGESCHWINDIGKEIT EINES ZUGES UND DIESBEZÜGLICHE VORRICHTUNGEN
PROCÉDÉ ET SYSTÈME DE DÉTERMINATION POUR VITESSE DE CONDUITE EN TEMPS RÉEL DE TRAIN, ET DISPOSITIFS ASSOCIÉS

(30) Priority: 20.12.2017 CN 201711386165
(43) Date of publication of application: 28.10.2020
(73) Proprietor: CRRC Changchun Railway Vehicles Co., Ltd., Changchun, Jilin 130000 (CN)
(72) Inventor: YAN, Weiwei, Jilin 130000 (CN); WANG, Huawei, Jilin 130000 (CN)
(74) Representative: Sharman, Thomas Alexander
(86) International application number: PCT/CN2017/119204
(87) International publication number: WO 2019/119494

(56) References cited:
- CN-A- 102 387 556
- CN-A- 105 059 325
- CN-A- 106 100 788
- DE-A1-102013 210 361
- DE-A1-102014 226 612
- DE-C1- 3 639 416
- JP-A- H05 246 342
- US-A1- 2008 051 967

## Description

The present application claims priority to Chinese Patent Application No. 5 201711386165.7, titled "DETERMINING METHOD AND SYSTEM FOR REAL-TIME DRIVING SPEED OF TRAIN AND RELATED DEVICES", filed on December 20, 2017 with the Chinese Patent Office.

### FIELD

The present invention relates to the technical field of train network control, and in particular to a method, a system, and an apparatus for determining a real-time running speed of a train, and a computer readable storage medium.

### BACKGROUND

With rapid development of economy, science and technology, high speed railway trains have been widely used. During high-speed running, it is particularly important to accurately determine and monitor a real-time running speed of a train, which not only is beneficial to intelligent control of the train, but also has great significance for safe transportation.

In an existing method for determining a real-time train speed, data that may reflect an actual running speed of a train is acquired only from a commonly used specific source, and then a conversion formula is used to obtain a real-time running speed of the train. However, due to the large quantity of devices in the train, the real-time running speed of the train derived from single-source data information is sometimes not reliable. Once the data source fails, the obtained real-time running speed of the train may be incorrect. Furthermore, due to the conversion, there may be a delay in speed feedback when the train runs at a high-speed. Thus, the existing methods for determining a real-time running speed of a train are not effective.

Therefore, in order to overcome the technical deficiencies existing in the conventional methods for determining a real-time running speed of a train, it is desired to provide a method including a wide variety of data sources and appropriate adjustment at a high speed running state so as to accurately determine a real-time running speed of a train.

In German Patent Application DE 10 2013 210361, a method for determining at least one speed in a rail vehicle is provided. A chassis speed measurement variable is provided by a sensor unit. Inertial measurement variables are detected by an inertial measurement unit; a reference speed characteristic value is formed; an inertial speed characteristic value is determined by a calculation unit based on the inertial measurement variables, in a first operating mode, to estimate a deviation in the inertial calculation based on the reference speed characteristic value; the inertial speed characteristic value is determined, in a second operating mode, without taking into account the reference speed characteristic value.

### SUMMARY

A method for determining a real-time running speed of a train is provided, which integrates a rotation speed of a traction motor obtained from a traction unit, an axle speed of a target axle obtained from a braking control unit, and a real-time running speed of a train provided by a GPS and uses the above parameters from different sources to provide different schemes for different actual train running speeds. By using the multiple sources of the parameters, and by eliminating a high-speed delay with a speed measured by a GPS in a high-speed running state, a more accurate real-time running speed of the train can be obtained, which facilitates subsequent intelligent control of the train.

A system, an apparatus and a computer readable storage medium for determining a real-time running speed of a train are also provided.

The method for determining a real-time running speed of a train provided according to the present invention includes the following steps. An axle speed of a target axle in a braking system and rotation speeds of one or more traction motors in a traction system in a target train are acquired. The rotation speeds are converted into a first real-time running speed by using a preset correspondence between a traction motor rotation speed and a train running speed in a case where the traction system is in a normal state. The axle speed is converted into a second real-time running speed by using a preset correspondence between the axle speed and the train running speed in a case where the braking system is in a normal state. The second real-time running speed is determined as an effective real-time running speed of the target train in a case where both the traction system and the braking system are in the normal state. It is determined whether the effective real-time running speed is greater than a preset running speed threshold, a third real-time running speed measured by a GPS is utilized to correct the effective real-time running speed in a case where the effective running speed is greater than the preset running speed threshold.

In an embodiment, the traction system is determined to be in the normal state by the method including: determining whether each of traction units in the traction system is in a normal data communication state; determining whether an abnormality occurs in a process of acquiring the rotation speeds of the one or more traction motors in a case where each of the traction units is in the normal data communication state; determining whether any one of acquired rotation speeds exceeds a preset rotation speed range in a case where no abnormality occurs in the process of acquiring the rotation speeds of the one or more traction motors; determining that the traction system is in the normal state in a case where none of the acquired rotation speeds exceeds the preset rotation speed range.

In an embodiment, the braking system is determined to be in the normal state by the method including: determining whether the braking system is in a preset failure state; determining whether an abnormality occurs in the target axle in a case where the braking system is not in the preset failure state; determining whether the braking system is in a normal data communication state in a case where no abnormality occurs in the target axle; determining that the braking system is in the normal state in a case where the braking system is in the normal data communication state.

In an embodiment, in a case where the target train comprises a plurality of traction systems, the method further includes: acquiring rotation speeds of one or more traction motors in all of the traction systems; obtaining temporary values of the first real-time running speeds by converting the rotation speeds by using the preset correspondence between the traction motor rotation speed and the train running speed; averaging all the temporary values of the first real-time running speed to obtain the first real-time running speed.

In an embodiment, the method further includes: determining the first real-time running speed as the effective real-time running speed in a case where an abnormality occurs in the braking system and the traction system is in the normal state.

In an embodiment, the correcting the effective real-time running speed by using a third real-time running speed measured by a GPS includes: measuring the real-time running speed of the target train by using the GPS to obtain the third real-time running speed; calculating a ratio between the third real-time running speed and the effective real-time running speed to obtain a correction parameter; and correcting the effective real-time running speed by using the correction parameter.

The system for determining a real-time running speed of a train provided according to the present invention includes: a parameter acquiring unit, a first running speed determining unit, a second running speed determining unit, an effective running speed determining unit and a determination and correction unit. The parameter acquiring unit is configured to acquire an axle speed of a target axle in a braking system and a rotation speed of a traction motor in a traction system in a target train. The first running speed determining unit is configured to convert the rotation speed into a first real-time running speed by using a preset correspondence between a traction motor rotation speed and a train running speed in a case where the traction system is in a normal state. The second running speed determining unit is configured to convert the axle speed into a second real-time running speed by using a preset correspondence between the axle speed and the train running speed in a case where the braking system is in the normal state. The effective running speed determining unit is configured to determine the second real-time running speed as an effective real-time running speed of the target train in a case where both the traction system and the braking system are in the normal state. The determination and correction unit is configured to determine whether the effective real-time running speed is greater than a preset running speed threshold and correct the effective real-time running speed by using a third real-time running speed measured by a GPS in a case where the effective running speed is greater than the preset running speed threshold.

In an embodiment, the determination and correction unit includes: a GPS measuring sub-unit, a correction parameter calculating sub-unit and a correction sub-unit. The GPS measuring sub-unit is configured to measure the real-time running speed of the target train by using the GPS to obtain the third real-time running speed. The correction parameter calculating sub-unit is configured to calculate a ratio between the third real-time running speed and the effective real-time running speed to obtain a correction parameter. The correction sub-unit is configured to correct the effective real-time running speed by using the correction parameter.

The apparatus for determining a real-time running speed of a train provided according to the present invention includes: a storage medium and a processor. The storage medium is configured to store computer programs. The processor is configured to perform steps of the above method for determining a real-time running speed of a train when executing the computer programs.

The computer readable storage medium provided according to the present invention stores computer programs. The computer program, when executed by a processor, causes the processor to perform the method for determining a real-time running speed of a train.

In the method for determining a real-time running speed of a train, an axle speed of a target axle in a braking system and a rotation speed of a traction motor in a traction system in a target train are acquired. The rotation speed is converted into a first real-time running speed by using a preset correspondence between a traction motor rotation speed and a train running speed in a case where the traction system is in a normal state. The axle speed is converted into a second real-time running speed by using a preset correspondence between the axle speed and the train running speed in a case where the braking system is in the normal state. The second real-time running speed is determined as an effective real-time running speed of the target train in a case where both the traction system and the braking system are in the normal state. It is determined whether the effective real-time running speed is greater than a preset running speed threshold. A third real-time running speed measured by a GPS is utilized to correct the effective real-time running speed in a case where the effective running speed is greater than the preset running speed threshold.

Apparently, the technical solution provided according to the present invention integrates a rotation speed of a traction motor obtained from a traction unit, an axle speed of a target axle obtained from a braking control unit, and a real-time running speed of the train provided by a GPS and uses the above parameters from different sources to provide different schemes for different actual train running speeds. By using the multiple sources of the parameters, and by eliminating a high-speed delay with a speed measured by a GPS in a high-speed running state, a more accurate real-time running speed of the train can be obtained, which facilitate subsequent intelligent control of the train. A determination system and an apparatus for determining a real-time running speed of a train and a computer readable storage medium are further provided according to the present invention, which have the above beneficial effects and are not repeated herein.

### BRIEF DESCRIPTION OF THE DRAWINGS

In order to more clearly illustrate technical solutions of the embodiments of the present invention or the conventional technology, the drawings required in the description of the embodiments or the conventional technology are briefly described below. Apparently, the drawings are only some embodiments of the present invention, and other drawings may be acquired by those skilled in the art based on the drawings provided herein without any creative work.
Figure 1 is a schematic flow diagram of a method for determining a real-time running speed of a train according to an embodiment of the present invention;
Figure 2 is a schematic flow diagram of determining that a traction system is in a normal state in a method for determining a real-time running speed of a train according to an embodiment of the present invention;
Figure 3 is a schematic flow diagram of determining that a braking system is in a normal state in a method for determining a real-time running speed of a train according to an embodiment of the present invention;
Figure 4 is a schematic flow diagram of correcting a speed by using a GPS in a method for determining a real-time running speed of a train according to an embodiment of the present invention; and
Figure 5 is a schematic structural block diagram of a system for determining a real-time running speed of a train according to an embodiment of the present invention.

### DETAILED DESCRIPTION

A method, a system, and an apparatus for determining a real-time running speed of a train and a computer readable storage medium are provided in the present invention, which integrates a rotation speed of a traction motor obtained from a traction unit, an axle speed of a target axle obtained from a braking control unit, and a real-time running speed of a train provided by a GPS and uses the above parameters from different sources to provide different schemes for different actual train running speeds. By using the multiple sources of the parameters, and by eliminating a high-speed delay with a speed measured by a GPS in a high-speed running state, a more accurate real-time running speed of the train can be obtained, which facilitates subsequent intelligent control of the train.

In order to make the purpose, technical solution and advantages of the embodiment of the present invention clearer, hereinafter, the technical solutions according to the embodiments of the present invention will be described clearly and completely in conjunction with the drawings. Apparently, the described embodiments are only a few rather than all of embodiments of the present invention. Any other embodiments obtained by those skilled in the art based on the embodiments of the present invention without any creative work fall within the scope of protection of the invention, as defined by the appended claims.

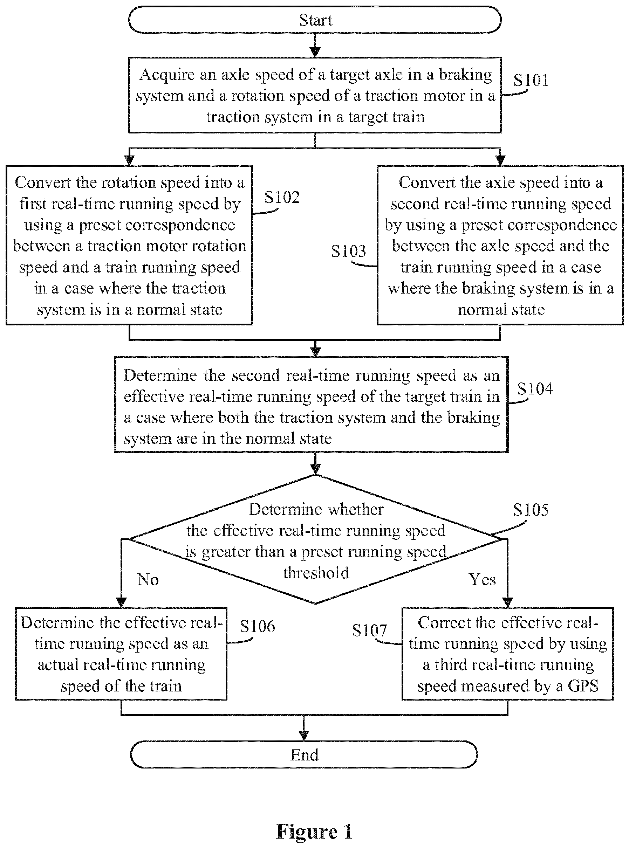

Reference is made to Figure 1, which is a schematic flow diagram of a method for determining a real-time running speed of a train according to an embodiment of the present invention.

The method includes the following steps S101 to S 107.

In step S101, an axle speed of a target axle in a braking system and a rotation speed of a traction motor in a traction system in a target train are acquired.

The braking system is responsible for controlling braking of the train, and thus it monitors the axle speed of each of the train axles. The target axle is a representative axle selected from all the train axles. A real-time running speed of the train converted from the axle speed of the target axle can best reflect a true real-time running speed, and thus it is used with a highest priority. The traction system provides traction for the target train, the most important part of which is the traction motor. In the embodiment, the rotation speed of the traction motor acquired from the traction system is also utilized to calculate the real-time running speed of the train.

There may be different numbers of traction systems in trains of different types and formations. Each traction system may include different numbers of traction motors. In a case that only one traction system exists and is in a normal operation state and only one traction motor is included in the traction system during the actual operation of the train, the rotation speed of the only traction motor is required to be obtained. The target axle is determined from all the train axles in the braking system based on a preset selection rule, and the axle speed is obtained by using a corresponding axle speed sensor. For example, in a multiple-unit train with eight carriages, an axle 3 in train axles of a locomotive may be selected as the target axle, and the axle speed of the target axle is required to be obtained.

Apparently, in the case of multiple traction systems or multiple traction motors in a traction system, there is a variety of ways to process multiple rotation speeds to obtain a representative speed. Only as a redundant design, for example, when a rotation speed of a traction motor in a traction system is unavailable, another rotation speeds may be obtained for subsequent processing and other processing such as averaging may also be performed to meet some special requirements. The selection rules of the target axle may also be changed according to the actual situation, which is not limited herein and may be flexibly selected based on the actual conditions.

In step S102, the rotation speed is converted into a first real-time running speed by using a preset correspondence between a traction motor rotation speed and a train running speed in a case where the traction system is in a normal state.

Based on step S101, in this step, the rotation speed is converted into a first real-time running speed by using a preset correspondence between a traction motor rotation speed and a train running speed in a case where the traction system is in a normal state. Apparently, in a case of multiple traction systems in the target train, this step may be changed as follows for example. The rotation speed of the traction motor in each of the traction systems is acquired. A corresponding numbers of temporary values of the first real-time running speed are obtained by converting the rotation speeds by using the preset correspondence between the traction motor rotation speed and the train running speed. Then an average of the temporary values of the first real-time running speed is calculated to obtain the first real-time running speed.

The preset correspondence between the traction motor rotation speed and the train running speed has been well known by those skilled in the art and may be different depending on different actual conditions, such as train types, working conditions and other influencing factors, which is not described herein.

In step S103, the axle speed is converted into a second real-time running speed by using a preset correspondence between the axle speed and the train running speed in a case where the braking system is in a normal state.

Based on step S101, in this step, the axle speed is converted into a second real-time running speed by using a preset correspondence between the axle speed and the train running speed in a case where the braking system is in a normal state. The normal states of the traction system and the braking system in steps S 102 and S103 are used to indicate that the actual working state of the traction motor and the target axle is normal and thus the rotation speed of the traction motor and the axle speed of the train axle obtained in this case are reliable and valid. The method for determining whether the traction system and the braking system are in the normal states is described in detail in the following embodiments.

In step S104, the second real-time running speed is determined as an effective real-time running speed of the target train in a case where both the traction system and the braking system are in the normal state.

Based on steps S102 and S103, in this step, the second real-time running speed is determined as an effective real-time running speed of the target train in a case where both the traction system and the braking system are in the normal state. The reason for discarding the first real-time running speed converted from the rotation speed of the traction motor in the traction system and using the second real-time running speed converted from the axle speed of the target axle in the braking system is that the target axle in the train braking system is connected with wheels that actually drives the train, and thus it can most truly reflect the actual running speed of the target train.

Apparently, this step is performed under the condition that the braking system is in the normal state. If an abnormality occurs in the braking system, which indicates that the axle speed of the target axle cannot be fed back or the feedback axle speed is not reliable, the first real-time running speed, as a reliable real-time running speed in this case, may be determined as the effective real-time running speed.

In step S105, it is determined whether the effective real-time running speed is greater than a preset running speed threshold.

Based on step S104, in this step, it is determined whether the effective real-time running speed is greater than a preset running speed threshold. Since a delay of the feedback of the running speed may occur when the train is in a high-speed running state, a least speed which may cause the delay is used as a speed threshold, to be compared with the effective real-time running speed.

In step S106, the effective real-time running speed is determined as an actual real-time running speed of the train.

This step is performed if a determination result in S 105 indicates that the effective running speed is less than the preset running speed threshold. That is, if a speed critical point at which the delay may occur is not yet reached, the effective real-time running speed may be directly determined as the actual real-time running speed of the train.

In step S107, the effective real-time running speed is corrected by using a third real-time running speed measured by a GPS.

This step is performed if the determination result in S 105 indicates that the effective running speed is greater than the preset running speed threshold. That is, if the speed critical point at which the delay may occur is reached, the third real-time running speed measured by the GPS is utilized to correct the effective real-time running speed.

Since the ultimate purpose is to obtain the accurate real-time running speed of the train based on the feedback from the train, the real-time running speed measured by the GPS, instead of directly being used, is only used to correct the effective real-time running speed.

There are various ways to correct the effective real-time running speed. For example, a difference or a ratio of the two is determined as a parameter for correction, which is not limited herein. An appropriate correction method may be chosen based on the actual situation.

From the above technical solution, it can be seen that the method for determining a real-time running speed of a train provided in the embodiment of the present invention integrates a rotation speed of a traction motor obtained from a traction unit, an axle speed of a target axle obtained from a braking control unit, and a real-time running speed of the train provided by the GPS and uses the above parameters from different sources to provide different schemes for different actual train running speeds. By using the multiple sources of the parameters, and by eliminating a high-speed delay with a speed measured by a GPS in a high-speed running state, a more accurate real-time running speed of the train can be obtained, which facilitates subsequent intelligent control of the train.

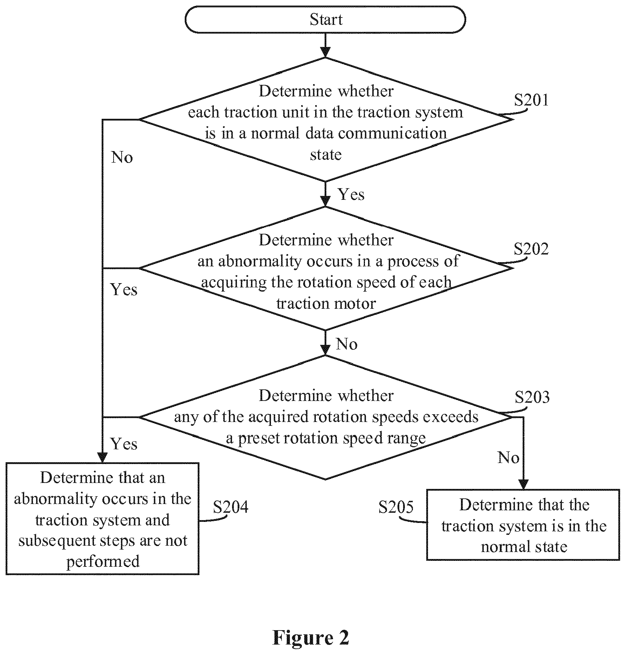

Reference is made to Figure 2, which is a schematic flow diagram of determining that a traction system is in a normal working state in a method for determining a real-time running speed of a train according to an embodiment of the present invention.

In this embodiment, only the method of how to determine that the traction system is in a normal working state in step S102 of the above embodiment is described in detail. The other steps are substantially the same as those in the above embodiment, which are not repeated herein.

The method may include the following steps S201 to S205.

In step S201, it is determined whether each of traction units in the traction system is in a normal data communication state.

In step S202, it is determined whether an abnormality occurs in a process of acquiring the rotation speeds of all the traction motor.

This step is performed under the condition that a determination result in step S201 indicates that each of the traction units is in the normal data communication state.

In step S203, it is determined whether any of acquired rotation speeds exceeds a preset rotation speed range.

This step is performed under the condition that a determination result in step S202 indicates that no abnormality occurs in the process of acquiring the rotation speeds of all the traction motors.

In step S204, it is determined that an abnormality occurs in the traction system and subsequent steps are not performed.

This step is performed as long as not all the above three determination conditions are met. That is, the traction system is determined as abnormal, and rotation speed information of the traction motor in the abnormal traction system is determined as unreliable. Therefore, the subsequent steps are required not to be performed. The three determination conditions are repeatedly determined until the three determination conditions are all met, and then the subsequent steps can be performed.

In step S205, it is determined that the traction system is in a normal state.

This step is performed under the condition that a determination result in step S203 indicates that none of the acquired rotation speeds exceeds the preset rotation speed range. Hence based on the fact that the above three determination conditions are all met, it can be determined that the traction system is in the normal state, and the rotation speed of the traction motor under this state is converted into the first real-time running speed by using a conversion formula in a subsequent step.

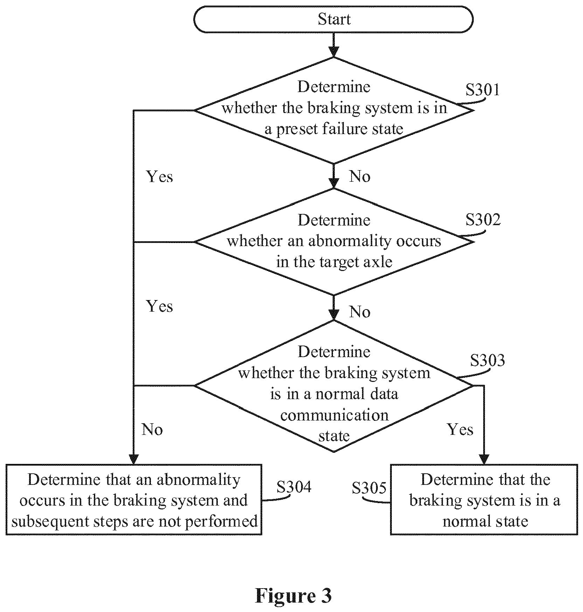

Reference is made to Figure 3, which is a schematic flow diagram of determining that a braking system is in a normal working state in a method for determining a real-time running speed of a train according to an embodiment of the present invention.

In this embodiment, only the method of how to determine that the braking system is in a normal working state in step S103 of the above embodiment is described in detail. The other steps are substantially the same as those in the above embodiment, which are not repeated herein.

The method may include the following steps S301 to S305.

In step S301, it is determined whether the braking system is in a preset failure state.

In step S302, it is determined whether an abnormality occurs in the target axle.

This step is performed under the condition that a determination result in step S301 indicates that the braking system of the target train is not in the preset failure state.

In step S303, it is determined whether the braking system is in a normal data communication state.

This step is performed under the condition that a determination result in step S302 indicates that no abnormality occurs in the target axle.

In step S304, it is determined that an abnormality occurs in the braking system and subsequent steps are not performed.

This step is performed as long as not all the above three determination conditions are met. That is, the target axle is determined as abnormal, and axle speed information from the abnormal target axle is determined as unreliable. Therefore, the subsequent steps are required not to be performed. The three determination conditions are repeatedly determined until the three determination conditions are all met, and then the subsequent steps can be performed.

In step S305, it is determined that the braking system is in a normal state.

This step is performed under the condition that a determination result in step S303 indicates that the braking system is in the normal data communication state. Hence based on the fact that the above three determination conditions are all met, it can be determined that the braking system is in the normal state, and the acquired axle speed of the target axle under this state is converted into the second real-time running speed by using a conversion formula in a subsequent step.

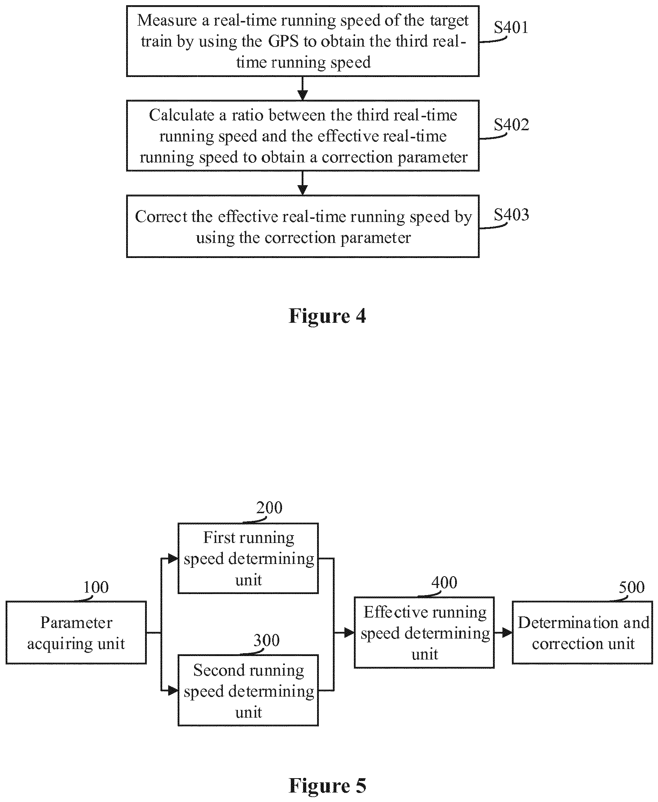

Reference is made to Figure 4, which is a schematic flow diagram of performing a speed correction by using a GPS in a method for determining a real-time running speed of a train according to an embodiment of the present invention.

In this embodiment, only the method of how to perform speed correction by using the GPS in step S107 of the above embodiment is described in detail. The other steps are substantially the same as those in the above embodiment, which are not repeated herein.

The method may include the following steps S401 to S403.

In step S401, a real-time running speed of the target train is measured by using the GPS to obtain a third real-time running speed.

In step S402, a ratio between the third real-time running speed and an effective real-time running speed is calculated to obtain a correction parameter.

In step S403, the effective real-time running speed is corrected by using the correction parameter.

In this embodiment, the ratio between the third real-time running speed and the effective real-time running speed is calculated as the correction parameter, to be used to correct the effective real-time running speed.

From the above technical solution, it can be seen that the method for determining a real-time running speed of a train provided in the embodiment of the present invention integrates a rotation speed of a traction motor obtained from a traction unit, an axle speed of a target axle obtained from a braking control unit, and a third real-time running speed of a train provided by the GPS and uses the above parameters from different sources to provide different schemes for different actual train running speeds. By using the multiple sources of the parameters, and by eliminating a high-speed delay with a speed measured by a GPS in a high-speed running state, a more accurate real-time running speed of the train can be obtained, which facilitates subsequent intelligent control of the train.

Due to complicated situations, the embodiments cannot be enumerated. Those skilled in the art should realize that any embodiments obtained based on a basic principle provided in the present invention in conjunction with actual situations without any creative work fall within the scope of protection of the invention.

Reference is made to Figure 5, which is a schematic structural block diagram of a system for determining a real-time train running speed according to an embodiment of the present invention.

The determination system may include a parameter acquiring unit 100, a first running speed determining unit 200, a second running speed determining unit 300, an effective running speed determining unit 400 and a determination and correction unit 500.

The parameter acquiring unit 100 is configured to acquire an axle speed of a target axle in a braking system and a rotation speed of a traction motor in a traction system in a target train.

The first running speed determining unit 200 is configured to convert the rotation speed into a first real-time running speed by using a preset correspondence between a traction motor rotation speed and a train running speed in a case where the traction system is in a normal state.

The second running speed determining unit 300 is configured to convert the axle speed into a second real-time running speed by using a preset correspondence between the axle speed and the train running speed in a case where the braking system is in a normal state.

The effective running speed determining unit 400 is configured to determine the second real-time running speed as an effective real-time running speed of the target train in a case where both the traction system and the braking system are in the normal state.

The determination and correction unit 500 is configured to determine whether the effective real-time running speed is greater than a preset running speed threshold and correct the effective real-time running speed by using a third real-time running speed measured by a global positioning system (GPS) in a case where the effective running speed is greater than the preset running speed threshold.

The determination and correction unit 500 includes a GPS measuring sub-unit, a correction parameter calculating sub-unit and a correction sub-unit.

The GPS measuring sub-unit is configured to measure the real-time running speed of the target train by using the GPS to obtain the third real-time running speed.

The correction parameter calculating sub-unit is configured to calculate a ratio between the third real-time running speed and the effective real-time running speed to obtain a correction parameter.

The correction sub-unit is configured to correct the effective real-time running speed by using the correction parameter.

Based on the above embodiments, an apparatus for determining a real-time running speed of a train is further provided according to the present invention, which may include a memory and a processor. The memory stores computer programs. The processor, when executing the computer programs in the memory, performs steps provided in the above embodiments. Apparently, the apparatus may further include various required network interfaces, power source and other components.

A computer readable storage medium is further provided according to the present invention. The computer readable storage medium stores computer programs. When the computer programs are performed by an executive terminal or a processor, the steps provided in the above embodiments are performed. The storage medium may include: a U-disk, a removable disk, a Read Only Memory (ROM), a Random Access Memory (RAM), a magnetic disk or a compact disk and other mediums that can store program codes.

It should be noted that the embodiments in the specification are described in a progressive manner, with the emphasis of each of the embodiments on the difference from other embodiments. For the same or similar parts between the embodiments, reference may be made one to another. Since the device disclosed in the embodiments corresponds to the method disclosed in the embodiment, the description for the device is simple, and reference may be made to the method embodiment for the relevant parts.

Those skilled in the art can further realize that the units and the algorithm steps of the examples described in conjunction with the embodiments disclosed herein, may be implemented by electronic hardware, computer software, or a combination thereof. To illustrate interchangeability between the hardware and the software clearly, the composition and the steps of each of the examples are generally described according to functions in the above illustration. Whether the functions being performed by hardware or software depends on a specific application and a design constraint condition of the technical solution. Those skilled in the art can implement the described functions using different methods for each of the specific applications, as far as the implementation fall within the scope of the present invention, as defined by the appended claims.

## Claims

1. A method for determining a real-time running speed of a train, comprising:
acquiring (S101) an axle speed of a target axle in a braking system and rotation speeds of one or more traction motors in a traction system in a target train;
converting (S102) the rotation speeds into a first real-time running speed by using a preset correspondence between a traction motor rotation speed and a train running speed if determining that the traction system is in a normal state;
converting (S103) the axle speed into a second real-time running speed by using a preset correspondence between the axle speed and the train running speed if determining that the braking system is in a normal state;
determining (S104) the second real-time running speed as an effective real-time running speed of the target train in a case where both the traction system and the braking system are in the normal state; and
determining (S105) whether the effective real-time running speed is greater than a preset running speed threshold, and correcting the effective real-time running speed by using a third real-time running speed measured by a global positioning system, GPS, in a case where the effective running speed is greater than the preset running speed threshold.

2. The method according to claim 1, wherein the determining that the traction system is in a normal state comprises:
determining (S201) whether each of traction units in the traction system is in a normal data communication state;
determining (S202) whether an abnormality occurs in a process of acquiring the rotation speeds of the one or more traction motors in a case where each of the traction units in the traction system is in the normal data communication state;
determining (S203) whether any one of acquired rotation speeds exceeds a preset rotation speed range in a case where no abnormality occurs in the process of acquiring the rotation speeds of the one or more traction motors; and
determining (S205) that the traction system is in the normal state in a case where none of the acquired rotation speeds exceeds the preset rotation speed range.

3. The method according to claim 2, wherein the determining (S205) that the braking system is in a normal state comprises:
determining (S301) whether the braking system is in a preset failure state;
determining (S302) whether an abnormality occurs in the target axle in a case where the braking system is not in the preset failure state;
determining (S303) whether the braking system is in a normal data communication state in a case where no abnormality occurs in the target axle; and
determining (S305) that the braking system is in the normal state in a case where the braking system is in the normal data communication state.

4. The method according to any one of claims 1 to 3, wherein in a case where the target train comprises a plurality of traction systems, the method further comprises:
acquiring rotation speeds of one or more traction motors in all of the plurality of traction systems;
obtaining temporary values of the first real-time running speed by converting the rotation speeds using the preset correspondence between the traction motor rotation speed and the train running speed; and
averaging all the temporary values of the first real-time running speed to obtain the first real-time running speed.

5. The method according to claim 4, further comprising:
determining the first real-time running speed as the effective real-time running speed in a case where an abnormality occurs in the braking system and the traction state is in the normal state.

6. The method according to claim 5, wherein the correcting the effective real-time running speed by using a third real-time running speed measured by a GPS comprises:
measuring (S401) the real-time running speed of the target train by using the GPS to obtain the third real-time running speed;
calculating (S402) a ratio between the third real-time running speed and the effective real-time running speed to obtain a correction parameter; and
correcting (S403) the effective real-time running speed by using the correction parameter.

7. A system for determining a real-time running speed of a train, comprising:
a parameter acquiring unit (100), configured to acquire an axle speed of a target axle in a braking system and a rotation speed of a traction motor in a traction system in a target train;
a first running speed determining unit (200), configured to convert the rotation speed into a first real-time running speed by using a preset correspondence between a traction motor rotation speed and a train running speed in a case where the traction system is in a normal state;
a second running speed determining unit (300), configured to convert the axle speed into a second real-time running speed by using a preset correspondence between the axle speed and the train running speed in a case where the braking system is in a normal state;
an effective running speed determining unit (400), configured to determine the second real-time running speed as an effective real-time running speed of the target train in a case where both the traction system and the braking system are in the normal state; and
a determination and correction unit (500), configured to determine whether the effective real-time running speed is greater than a preset running speed threshold and correct the effective real-time running speed by using a third real-time running speed measured by a global positioning system, GPS, in a case where the effective running speed is greater than the preset running speed threshold.

8. The system according to claim 7, wherein the determination and correction unit (500) comprises:
a GPS measuring sub-unit, configured to measure the real-time running speed of the target train by using the GPS to obtain the third real-time running speed;
a correction parameter calculating sub-unit, configured to calculate a ratio between the third real-time running speed and the effective real-time running speed to obtain a correction parameter; and
a correction sub-unit, configured to correct the effective real-time running speed by using the correction parameter.

9. A computer readable storage medium, storing computer programs, wherein the computer program, when executed by a processor, causes the processor to perform the method for determining a real-time running speed of a train according to any one of claims 1 to 6.

10. An apparatus for determining a real-time running speed of a train, comprising:
a storage medium, configured to store computer programs, according to claim 9,
a processor, configured to perform steps of the method for determining a real-time running speed of a train described according to any of claims 1 to 6 when executing the computer programs.

## Patentansprüche

1. Verfahren zur Bestimmung einer Echtzeit-Fahrgeschwindigkeit eines Zuges, das Folgendes aufweist:
Erfassen (S101) einer Achsgeschwindigkeit einer Zielachse in einem Bremssystem und von Drehzahlen von ein oder mehr Fahrmotoren in einem Traktionssystem in einem Zielzug;
Umrechnen (S102) der Drehzahlen in eine erste Echtzeit-Fahrgeschwindigkeit mithilfe einer voreingestellten Entsprechung zwischen einer Fahrmotordrehzahl und einer Fahrgeschwindigkeit des Zugs, wenn bestimmt wird, dass das Traktionssystem in einem Normalzustand ist;
Umrechnen (S103) der Achsgeschwindigkeit in eine zweite Echtzeit-Fahrgeschwindigkeit mithilfe einer voreingestellten Entsprechung zwischen der Achsgeschwindigkeit und der Fahrgeschwindigkeit des Zugs, wenn bestimmt wird, dass das Bremssystem in einem Normalzustand ist;
Bestimmen (S 104) der zweiten Echtzeit-Fahrgeschwindigkeit als eine effektive Echtzeit-Fahrgeschwindigkeit des Zielzuges in einem Fall, in dem sich sowohl das Traktionssystem als auch das Bremssystem im dem Normalzustand befinden; und
Bestimmen (S105), ob die effektive Echtzeit-Fahrgeschwindigkeit größer als ein voreingestellter Fahrgeschwindigkeitsschwellenwert ist, und Korrigieren der effektiven Echtzeit-Fahrgeschwindigkeit mithilfe einer dritten Echtzeit-Fahrgeschwindigkeit, die von einem globalen Positionsbestimmungssystem, GPS, gemessen wird, in einem Fall, in dem die effektive Fahrgeschwindigkeit größer als der voreingestellte Fahrgeschwindigkeitsschwellenwert ist.

2. Verfahren nach Anspruch 1, wobei das Bestimmen, dass das Traktionssystem in einem Normalzustand ist, Folgendes aufweist:
Bestimmen (S201), ob jede der Traktionseinheiten im Traktionssystem in einem normalen Datenkommunikationszustand ist;
Bestimmen (S202), ob in einem Prozess des Erfassens der Drehzahl der ein oder mehr Fahrmotoren eine Abnormalität auftritt, in einem Fall, in dem jede der Traktionseinheiten im Traktionssystem im normalen Datenkommunikationszustand ist;
Bestimmen (S203), ob eine der erfassten Drehzahlen einen voreingestellten Drehzahlbereich übersteigt, in einem Fall, in dem im Prozess des Erfassens der Drehzahl der ein oder mehr Fahrmotoren keine Abnormalität auftritt; und
Bestimmen (S205), dass das Traktionssystem im Normalzustand ist, in einem Fall, in dem keine der erfassten Drehzahlen den voreingestellten Drehzahlbereich übersteigt.

3. Verfahren nach Anspruch 2, wobei das Bestimmen (S205), dass das Bremssystem in einem Normalzustand ist, Folgendes aufweist:
Bestimmen (S301), ob das Bremssystem in einem voreingestellten Ausfallzustand ist;
Bestimmen (S302), ob in der Zielachse eine Abnormalität auftritt, in einem Fall, in dem das Bremssystem nicht im voreingestellten Ausfallzustand ist;
Bestimmen (S303), ob das Bremssystem in einem normalen Datenkommunikationszustand ist, in einem Fall, in dem in der Zielachse keine Abnormalität auftritt; und
Bestimmen (S305), dass das Bremssystem im Normalzustand ist, in einem Fall, in dem das Bremssystem im normalen Datenkommunikationszustand ist.

4. Verfahren nach einem der Ansprüche 1 bis 3, wobei in einem Fall, in dem der Zielzug mehrere Traktionssysteme aufweist, das Verfahren Folgendes aufweist:
Erfassen von Drehzahlen von ein oder mehr Fahrmotoren in allen der mehreren Traktionssysteme;
Ermitteln vorläufiger Werte der ersten Echtzeit-Fahrgeschwindigkeit durch Umrechnen der Drehzahlen unter Verwendung der voreingestellten Entsprechung zwischen der Fahrmotordrehzahl und der Fahrgeschwindigkeit des Zuges; und
Ermitteln des Mittels aller vorläufigen Werte der ersten Echtzeit-Fahrgeschwindigkeit zum Ermitteln der ersten Echtzeit-Fahrgeschwindigkeit.

5. Verfahren nach Anspruch 4, das ferner Folgendes aufweist:
Bestimmen der ersten Echtzeit-Fahrgeschwindigkeit als der effektiven Echtzeit-Fahrgeschwindigkeit in einem Fall, in dem im Bremssystem eine Abnormalität auftritt und der Traktionszustand im Normalzustand ist.

6. Verfahren nach Anspruch 5, wobei das Korrigieren der effektiven Echtzeit-Fahrgeschwindigkeit mithilfe einer von einem GPS gemessenen dritten Echtzeit-Fahrgeschwindigkeit Folgendes aufweist:
Messen (S401) der Echtzeit-Fahrgeschwindigkeit des Zielzuges mithilfe des GPS zum Ermitteln der dritten Echtzeit-Fahrgeschwindigkeit;
Berechnen (S402) eines Verhältnisses zwischen der dritten Echtzeit-Fahrgeschwindigkeit und der effektiven Echtzeit-Fahrgeschwindigkeit zum Ermitteln eines Korrekturparameters; und
Korrigieren (S403) der effektiven Echtzeit-Fahrgeschwindigkeit mithilfe des Korrekturparameters.

7. System zur Bestimmung einer Echtzeit-Fahrgeschwindigkeit eines Zuges, das Folgendes aufweist:
eine Parametererfassungseinheit (100), die konfiguriert ist zum Erfassen einer Achsgeschwindigkeit einer Zielachse in einem Bremssystem und einer Drehzahl eines Fahrmotors in einem Traktionssystem in einem Zielzug;
eine erste Fahrgeschwindigkeit-Bestimmungseinheit (200), die konfiguriert ist zum Umrechnen der Drehzahl in eine erste Echtzeit-Fahrgeschwindigkeit mithilfe einer voreingestellten Entsprechung zwischen einer Fahrmotordrehzahl und einer Fahrgeschwindigkeit des Zuges in einem Fall, in dem das Traktionssystem in einem Normalzustand ist;
eine zweite Fahrgeschwindigkeit-Bestimmungseinheit (300), die konfiguriert ist zum Umrechnen der Achsgeschwindigkeit in eine zweite Echtzeit-Fahrgeschwindigkeit mithilfe einer voreingestellten Entsprechung zwischen der Achsgeschwindigkeit und der Fahrgeschwindigkeit des Zuges in einem Fall, in dem das Bremssystem in einem Normalzustand ist;
ein Effektive-Fahrgeschwindigkeit-Bestimmungseinheit (400), die konfiguriert ist zum Bestimmen der zweiten Echtzeit-Fahrgeschwindigkeit als einer effektiven Echtzeit-Fahrgeschwindigkeit des Zielzuges in einem Fall, in dem sowohl das Traktionssystem als auch das Bremssystem im Normalzustand sind; und
eine Bestimmungs- und Korrektureinheit (500), die konfiguriert ist zum Bestimmen, ob die effektive Echtzeit-Fahrgeschwindigkeit größer als ein voreingestellter Fahrgeschwindigkeitsschwellenwert ist, und zum Korrigieren der effektiven Echtzeit-Fahrgeschwindigkeit mithilfe einer dritten Echtzeit-Fahrgeschwindigkeit, die von einem globalen Positionsbestimmungssystem, GPS, gemessen wird, in einem Fall, in dem die effektive Fahrgeschwindigkeit größer als der voreingestellte Fahrgeschwindigkeitsschwellenwert ist.

8. System nach Anspruch 7, wobei die Bestimmungs- und Korrektureinheit (500) Folgendes aufweist:
eine GPS-Mess-Untereinheit, die konfiguriert ist zum Messen der Echtzeit-Fahrgeschwindigkeit des Zielzuges mithilfe des GPS zum Ermitteln der dritten Echtzeit-Fahrgeschwindigkeit;
eine Korrekturparameterberechnungs-Untereinheit, die konfiguriert ist zum Berechnen eines Verhältnisses zwischen der dritten Echtzeit-Fahrgeschwindigkeit und der effektiven Echtzeit-Fahrgeschwindigkeit zum Ermitteln eines Korrekturparameters; und
eine Korrekturuntereinheit, die konfiguriert ist zum Korrigieren der effektiven Echtzeit-Fahrgeschwindigkeit mithilfe des Korrekturparameters.

9. Computerlesbares Speichermedium, das Computerprogramme speichert, wobei das Computerprogramm bei Ausführung durch einen Prozessor den Prozessor zum Durchführen des Verfahrens zur Bestimmung einer Echtzeit-Fahrgeschwindigkeit eines Zuges nach einem der Ansprüche 1 bis 6 veranlasst.

10. Vorrichtung zur Bestimmung einer Echtzeit-Fahrgeschwindigkeit eines Zuges, die Folgendes aufweist:
ein Speichermedium, das zum Speichern von Computerprogrammen konfiguriert ist, nach Anspruch 9,
einen Prozessor, der bei Ausführung der Computerprogramme zum Durchführen von Schritten des beschriebenen Verfahrens zur Bestimmung einer Echtzeit-Fahrgeschwindigkeit eines Zuges nach einem der Ansprüche 1 bis 6 konfiguriert ist.

## Revendications

1. Procédé de détermination d'une vitesse de roulement en temps réel d'un train, comprenant :
acquérir (S101) une vitesse d'essieu d'un essieu cible dans un système de freinage et des vitesses de rotation d'un ou plusieurs moteurs de traction dans un système de traction dans un train cible ;
convertir (S102) les vitesses de rotation en une première vitesse de roulement en temps réel en utilisant une correspondance préréglée entre une vitesse de rotation de moteur de traction et une vitesse de roulement de train s'il est déterminé que le système de traction est dans un état normal ;
convertir (S103) la vitesse d'essieu en une deuxième vitesse de roulement en temps réel en utilisant une correspondance préréglée entre la vitesse d'essieu et la vitesse de roulement du train s'il est déterminé que le système de freinage est dans un état normal ;
déterminer (S104) la deuxième vitesse de roulement en temps réel comme une vitesse de roulement en temps réel effective du train cible dans un cas dans lequel le système de traction et le système de freinage sont tous les deux dans l'état normal ; et
déterminer (S 105) si la vitesse de roulement en temps réel effective est supérieure à un seuil de vitesse de roulement préréglé, et corriger la vitesse de roulement en temps réel effective en utilisant une troisième vitesse de roulement en temps réel mesurée par un système de navigation par satellites, GPS, dans un cas dans lequel la vitesse de roulement effective est supérieure au seuil de vitesse de roulement préréglé.

2. Procédé selon la revendication 1, dans lequel le fait de déterminer que le système de traction est dans un état normal comprend :
déterminer (S201) si chacune des unités de traction dans le système de traction est dans un état normal de communication de données ;
déterminer (S202) si une anomalie survient dans un processus d'acquisition des vitesses de rotation de l'un ou plusieurs moteurs de traction dans un cas dans lequel chacune des unités de traction dans le système de traction est dans l'état normal de communication de données ;
déterminer (S203) si l'une quelconque des vitesses de rotation acquises dépasse une plage de vitesse de rotation préréglée dans un cas dans lequel aucune anomalie ne survient dans le processus d'acquisition des vitesses de rotation de l'un ou plusieurs moteurs de traction ; et
déterminer (S205) que le système de traction est dans l'état normal dans un cas dans lequel aucune des vitesses de rotation acquises ne dépasse la plage de vitesse de rotation préréglée.

3. Procédé selon la revendication 2, dans lequel le fait de déterminer (S205) que le système de freinage est dans un état normal comprend :
déterminer (S301) si le système de freinage est dans un état de défaillance préréglé ;
déterminer (S302) si une anomalie survient dans l'essieu cible dans un cas dans lequel le système de freinage n'est pas dans l'état de défaillance préréglé ;
déterminer (S303) si le système de freinage est dans un état normal de communication de données dans un cas dans lequel aucune anomalie ne survient dans l'essieu cible ; et
déterminer (S305) que le système de freinage est dans l'état normal dans un cas dans lequel le système de freinage est dans l'état normal de communication de données.

4. Procédé selon l'une quelconque des revendications 1 à 3, dans lequel dans un cas dans lequel le train cible comprend une pluralité de systèmes de traction, le procédé comprend en outre :
acquérir des vitesses de rotation d'un ou plusieurs moteurs de traction dans tous de la pluralité de systèmes de traction ;
obtenir des valeurs temporaires de la première vitesse de roulement en temps réel en convertissant les vitesses de rotation en utilisant la correspondance préréglée entre la vitesse de rotation de moteur de traction et la vitesse de roulement du train ; et
établir la moyenne de toutes les valeurs temporaires de la première vitesse de roulement en temps réel pour obtenir la première vitesse de roulement en temps réel.

5. Procédé selon la revendication 4, comprenant en outre :
déterminer si la première vitesse de roulement en temps réel est la vitesse de roulement en temps réel effective dans un cas dans lequel une anomalie survient dans le système de freinage et le système de traction est dans l'état normal.

6. Procédé selon la revendication 5, dans lequel le fait de corriger la vitesse de roulement en temps réel effective en utilisant une troisième vitesse de roulement en temps réel mesurée par un GPS, comprend :
mesurer (S401) la vitesse de roulement en temps réel du train cible en utilisant le GPS pour obtenir la troisième vitesse de roulement en temps réel ;
calculer (S402) un rapport entre la troisième vitesse de roulement en temps réel et la vitesse de roulement en temps réel effective pour obtenir un paramètre de correction ; et
corriger (S403) la vitesse de roulement en temps réel effective en utilisant le paramètre de correction.

7. Système de détermination d'une vitesse de roulement en temps réel d'un train, comprenant :
une unité d'acquisition de paramètre (100) configurée pour acquérir une vitesse d'essieu d'un essieu cible dans un système de freinage et une vitesse de rotation d'un moteur de traction dans un train cible ;
une unité de détermination de première vitesse de roulement (200), configurée pour convertir la vitesse de rotation en une première vitesse de roulement en temps réel en utilisant une correspondance préréglée entre une vitesse de rotation de moteur de traction et une vitesse de roulement du train dans un cas dans lequel le système de traction est dans un état normal ;
une unité de détermination de deuxième vitesse de roulement (300), configurée pour convertir la vitesse d'essieu en une deuxième vitesse de roulement en temps réel en utilisant une correspondance préréglée entre la vitesse d'essieu et la vitesse de roulement du train dans un cas dans lequel le système de freinage est dans un état normal ;
une unité de détermination de vitesse de roulement effective (400), configurée pour déterminer la deuxième vitesse de roulement en temps réel comme une vitesse de roulement en temps réel effective du train cible dans un cas dans lequel le système de traction et le système de freinage sont tous les deux dans l'état normal ; et
une unité de détermination et de correction (500), configurée pour déterminer si la vitesse de roulement en temps réel effective est supérieure à un seuil de vitesse de roulement préréglé et corriger la vitesse de roulement en temps réel effective en utilisant une troisième vitesse de roulement en temps réel mesurée par un système de navigation par satellites, GPS, dans un cas dans lequel la vitesse de roulement effective est supérieure au seuil de vitesse de roulement préréglé.

8. Système selon la revendication 7, dans lequel l'unité de détermination et de correction (500) comprend :
une sous-unité de mesure par GPS, configurée pour mesurer la vitesse de roulement en temps réel du train cible en utilisant le GPS pour obtenir la troisième vitesse de roulement en temps réel ;
une sous-unité de calcul de paramètre de correction, configurée pour calculer un rapport entre la troisième vitesse de roulement en temps réel et la vitesse de roulement en temps réel effective afin d'obtenir un paramètre de correction ; et
une sous-unité de correction, configurée pour corriger la vitesse de roulement en temps réel effective en utilisant le paramètre de correction.

9. Support de stockage lisible par ordinateur, stockant des programmes informatiques, dans lequel le programme informatique, lorsque exécuté par un processeur, fait que le processeur met en oeuvre le procédé de détermination d'une vitesse de roulement en temps réel d'un train selon l'une quelconque des revendications 1 à 6.

10. Appareil de détermination d'une vitesse de roulement en temps réel d'un train, comprenant :
un support de stockage, configuré pour stocker des programmes informatiques, selon la revendication 9,
un processeur, configuré pour mettre en oeuvre les étapes du procédé de détermination d'une vitesse de roulement en temps réel d'un train décrites selon l'une quelconque des revendications 1 à 6 lorsque exécutant les programmes informatiques.
